# EUROPEAN PATENT SPECIFICATION

(11) **EP 4 312 297 B1**
(45) Date of publication and mention of the grant of the patent: **19.03.2025**
(21) Application number: 23187920.6
(22) Date of filing: 26.07.2023
(51) Int. Cl.: H01M 10/0565, H01M 50/403

(54) **SOLID-STATE ELECTROLYTE (SSE) WITH SANDWICH STRUCTURE AND PREPARATION METHOD AND USE THEREOF, AND SOLID-STATE LITHIUM ION BATTERY**
FESTSTOFFELEKTROLYT (SSE) MIT SANDWICHSTRUKTUR UND HERSTELLUNGSVERFAHREN UND VERWENDUNG DAVON SOWIE FESTSTOFF-LITHIUM-IONEN-BATTERIE
ÉLECTROLYTE À ÉTAT SOLIDE (SSE) À STRUCTURE EN SANDWICH ET SON PROCÉDÉ DE PRÉPARATION ET SON UTILISATION, ET BATTERIE AU LITHIUM-ION À ÉTAT SOLIDE

(30) Priority: 26.07.2022 CN 202210881786
(43) Date of publication of application: 31.01.2024
(73) Proprietor: Jilin Dongchi New Energy Technology Co., Ltd., 130000 Changchun Jilin (CN)
(72) Inventor: LIU, Yulong, Changchun, Jilin Province, 130000 (CN); XU, Pingbo, Changchun, Jilin Province, 130000 (CN); GONG, Yiqi, Changchun, Jilin Province, 130000 (CN); SUN, Liqun, Changchun, Jilin Province, 130000 (CN); XIE, Haiming, Changchun, Jilin Province, 130000 (CN)
(74) Representative: Croce, Valeria

(56) References cited:
- CN-A- 113 013 481
- CN-A- 113 948 766
- DE-A1- 102016 216 549
- US-A1- 2017 170 441

## Description

### TECHNICAL FIELD

The present disclosure belongs to the technical field of lithium batteries, and in particular relates to a solid-state electrolyte (SSE) with a sandwich structure and a preparation method and use thereof, and a solid-state lithium ion battery.

### BACKGROUND

The rapid development of lithium ion batteries has caused a worldwide energy revolution. The ever-improving electrochemical performance of lithium-ion batteries has greatly promoted the vigorous development of electric vehicles and large-scale energy storage power stations. However, with the increase of energy density, lithium batteries have more fire and explosion accidents, showing more prominent safety problems. In this context, solid-state batteries are considered to be one of the next-generation battery technologies most likely to replace traditional lithium batteries due to their thermal-electrochemical stability, high safety performance, and excellent cycle performance. Currently, various solid-state electrolytes (SSEs), such as inorganic SSEs, polymer-based SSEs, inorganic-polymer-based composite SSEs, or gel polymer-based SSEs, have been proposed and investigated to fabricate rechargeable solid-state Li metal batteries. The polymer-based SSE is an SSE most likely to be commercialized.

In order to further optimize the electrochemical performance and safety performance of solid-state lithium metal batteries, further fundamental research and development of polymer-based SSEs are required in terms of operating temperature, safety, ionic conductivity, transference number, and mechanical properties. Compared with other emerging lithium ion conducting polymer-based SSEs, polyethylene oxide (PEO) polymer-based SSEs are considered as a competitive candidate. However, PEO polymer-based SSEs are pure polymer electrolytes with poor mechanical properties. Moreover, the pure polymer electrolytes can spontaneously recrystallize according to an ordered structure during the lithium-conducting process, resulting in a low room-temperature ionic conductivity.

### SUMMARY

In view of this, an objective of the present disclosure is to provide a solid-state electrolyte (SSE) with a sandwich structure and a preparation method and use thereof, and a solid-state lithium ion battery. In the present disclosure, the SSE with a sandwich structure has relatively high room-temperature ion conductivity and mechanical strength.

To achieve the above objective, the present disclosure provides the following technical solutions:

The present disclosure provides an SSE with a sandwich structure, including a lithium battery separator and a first composite SSE and a second composite SSE that are coated on two side surfaces of the lithium battery separator, respectively; where raw materials of the first composite SSE and the second composite SSE independently include PEO, a ceramic powder, an ionic liquid, a lithium salt, and a photoinitiator, such as specified in claim 1.

The PEO, the ceramic powder, the ionic liquid, the lithium salt, and the photoinitiator are at a mass ratio of (20-90):(5-15):(10-60):(10-50):(0.5-2).

Preferably, the lithium battery separator is selected from the group consisting of a polyethylene separator, a polypropylene separator, a ceramic separator, and a cellulose separator.

The PEO has a weight-average molecular weight of 0.1 million to 7 million.

The ceramic powder is one or more selected from the group consisting of lithium aluminum titanium phosphate (LATP), lithium lanthanum zirconium oxide (LLZO), lithium lanthanum titanium oxide (LLTO), lithium aluminum oxide (LAO), doped LLZO, lithium germanium phosphorus sulfide (LGPS), and lithium phosphorus sulfide (LPS).

The ionic liquid is selected from the group consisting of an imidazole-based ionic liquid and a pyrrolidine-based ionic liquid.

The lithium salt is one or more selected from the group consisting of lithium perchlorate, lithium hexafluoroarsenate, lithium hexafluorophosphate, lithium bis(trifluoromethanesulphonyl)imide, lithium tetrafluoroborate, lithium trifluoromethanesulfonate, and lithium bis(oxalate)borate; and the photoinitiator includes a hydrogen abstraction photoinitiator.

The present disclosure further provides a preparation method of the SSE with a sandwich structure, including the following steps:
mixing the PEO, the ceramic powder, the ionic liquid, the lithium salt, and the photoinitiator with an organic solvent, coating an obtained slurry on the two side surfaces of the lithium battery separator, and drying to obtain a film with a sandwich structure; and
subjecting the film with a sandwich structure to hot pressing and ultraviolet crosslinking sequentially to obtain the SSE with a sandwich structure.

The present disclosure further provides use of the SSE with a sandwich structure or an SSE with a sandwich structure prepared by the preparation method in a solid-state lithium ion battery.

The present disclosure further provides a solid-state lithium ion battery, including a cathode, an SSE with a sandwich structure, and an anode that are sequentially laminated; where
the SSE with a sandwich structure is the SSE with a sandwich structure described above or an SSE with a sandwich structure prepared by the preparation method.

The present disclosure provides an SSE with a sandwich structure, including a lithium battery separator and a first composite SSE and a second composite SSE that are separately coated on two side surfaces of the lithium battery separator; where raw materials of the first composite SSE and the second composite SSE independently include PEO, a ceramic powder, an ionic liquid, a lithium salt, and a photoinitiator. In the present disclosure, the SSE with a sandwich structure uses a separator used in the liquid lithium ion battery for the SSE, and uses the lithium battery separator as a support; there are uniformly arranged pores in a lithium battery separator of the SSE with a sandwich structure, and these pores can regulate a lithium flux and allow lithium ions to pass through in an orderly manner. In this way, the uniform deposition of lithium ions on the anode is promoted, thus inhibiting the growth of lithium dendrites. This aims to provide desirable interfacial compatibility, lower interfacial impedance and polarization voltage, and highly stable cycle efficiency, thereby improving an electrochemical stability of the SSE. Both sides of the lithium battery separator are coated with a composite SSE containing a lithium salt, a ceramic powder, and an ionic liquid. These organic-inorganic materials can disrupt the order of a polyethylene oxide (PEO) polymer, thereby inhibiting recrystallization of the PEO polymer. This makes the PEO polymer more efficient in transporting lithium ions, thus enhancing ion conductivity and widening electrochemical window. In addition, the lithium battery separator can also enhance mechanical properties of the PEO polymer-based SSE.

In addition, the solid-state lithium ion battery assembled by the SSE with a sandwich structure provided by the present disclosure has stable cycle performance, high capacity utilization rate, and safety performance.

### BRIEF DESCRIPTION OF THE DRAWINGS

FIG. 1 shows a sectional view of a scanning electron microscopy (SEM) image of the SSE with a sandwich structure in Example 1 of the present disclosure;
FIG. 2 shows an impedance diagram of a full battery assembled by the SSE with a sandwich structure in Example 2 of the present disclosure;
FIG. 3 shows a cycle performance of a button battery assembled by the SSE with a sandwich structure in Example 3 of the present disclosure at 0.1 C, 0.2 C, 0.5 C, 1 C, and 2 C;
FIG. 4 shows a cycle performance of a button battery assembled by the SSE with a sandwich structure in Example 4 of the present disclosure at 0.1 C;
FIG. 5 shows a specific capacity-efficiency diagram of the button battery assembled by the SSE with a sandwich structure in Example 4 of the present disclosure at 0.1 C; and
FIG. 6 shows a specific capacity-efficiency diagram of a button battery assembled by the SSE with a sandwich structure in Comparative Example 1 of the present disclosure at 0.1 C.

### DETAILED DESCRIPTION OF THE EMBODIMENTS

The present disclosure provides an SSE with a sandwich structure, including a lithium battery separator and a first composite SSE and a second composite SSE that are separately coated on two side surfaces of the lithium battery separator; where raw materials of the first composite SSE and the second composite SSE independently include PEO, a ceramic powder, an ionic liquid, a lithium salt, and a photoinitiator.

Unless otherwise specified, the present disclosure has no special requirements for sources of the used raw materials, and commercially-available products well known to those skilled in the art may be adopted.

In the present disclosure, the SSE with a sandwich structure includes a lithium battery separator. The lithium battery separator includes preferably a polyethylene separator, a polypropylene separator, a ceramic separator, or a cellulose separator, more preferably the polyethylene separator; and the lithium battery separator has a thickness of preferably 10 µm to 40 µm, more preferably 10 µm to 30 µm. There is no special limitation on a source of the lithium battery separator, and a commercially available lithium battery separator can be selected as required.

In the present disclosure, the SSE with a sandwich structure includes a first composite SSE and a second composite SSE that are coated on two side surfaces of the lithium battery separator.

In the present disclosure, raw materials of the first composite SSE and the second composite SSE independently include PEO, a ceramic powder, an ionic liquid, a lithium salt, and a photoinitiator.

In the present disclosure, the PEO has a weight-average molecular weight of 0.1 million to 7 million, more preferably 1 million to 5 million. The ceramic powder includes one or more of LATP, LLZO, LLTO, LAO, doped LLZO, LGPS, and LPS, more preferably one or more of Li₁₊ₓAlₓTi₂₋ₓ(PO₄)₃, 0<x≤0.5 (LATP), Li₇La₃Zr₂O₁₂ (LLZO), Li_{y}La_{2/3-y}TiO₃, 0.04<y≤0.16 (LLTO), LiAlO₂ (LAO), Li_{7-z}La₃Zr_{2-z}M_{z}O₁₂, M=Ta, Nb, 0.25<z<2 (LLZMO), Li₇₊ₐGeₐP₃₋ₐS₁₁, 0.5<a<3 (LGPS), and bLi₂S·(100-b)P₂S₅, 25<b<75 (LPS), and most preferably one or more of Li₁₊ₓAlₓTi₂₋ₓ(PO₄)₃, 0<x≤0.5 (LATP), Li₇La₃Zr₂O₁₂ (LLZO), Li_{y}La_{2/3-y}TiO₃, 0.04<y≤0.16 (LLTO), LiAlO₂ (LAO), Li_{7-z}La₃Zr_{2-z}M_{z}O₁₂, M=Ta, Nb, 0.25<z<2 (LLZMO), Li₇₊ₐGeₐP₃₋ₐS₁₁, 0.5<a<3 (LGPS), or bLi₂S·(100-b)P₂S₅,25<b<75 (LPS). When the ceramic powder includes the above types, there is no special limitation on a ratio of different types of ceramic powders, and any ratio can be adopted.

In the present disclosure, the ionic liquid is an imidazole-based ionic liquid or a pyrrolidine-based ionic liquid, more preferably the imidazole-based ionic liquid. The imidazole ionic liquid is 1-ethyl-3-methylimidazole bis(trifluoromethanesulphonyl)imide (EMIM-TFSI) or 1-ethyl-3-methylimidazole tetraborate (EMIM-BF₄), more preferably the 1-ethyl-3-methylimidazole bis(trifluoromethanesulphonyl)imide (EMIM-TFSI). The pyrrolidine-based ionic liquid is preferably 1-n-butyl-1-methylpyrrolidine bis(trifluoromethanesulphonyl)imide (Pyr14-TFSI).

In the present disclosure, the lithium salt includes one or more of lithium perchlorate (LiClO₄), lithium hexafluoroarsenate (LiAsF₆), lithium hexafluorophosphate (LiPF₆), lithium bis(trifluoromethanesulphonyl)imide (LiTFSI), lithium tetrafluoroborate (LiBF₄), lithium trifluoromethanesulfonate (LiCF₃SO₃), and lithium bis(oxalate)borate (LiBOB), more preferably the lithium bis(oxalate)borate and/or lithium bis(trifluoromethanesulphonyl)imide. When the lithium salt includes the above types, there is no special limitation on a ratio of different types of lithium salts, and any ratio can be adopted.

In the present disclosure, the photoinitiator includes a hydrogen abstraction photoinitiator. The hydrogen abstraction photoinitiator includes preferably a benzophenone derivative, more preferably benzophenone or Michler's ketone, most preferably the benzophenone.

In the present disclosure, the PEO, the ceramic powder, the ionic liquid, the lithium salt, and the photoinitiator are at a mass ratio of (20-90):(5-15):(10-60):(10-50):(0.5-2). more preferably (30-70):(5-10):(20-30):(10-30):(0.5-2).

In the present disclosure, the SSE with a sandwich structure has a thickness of preferably 50 µm to 200 µm, more preferably 50 µm to 100 µm.

The present disclosure further provides a preparation method of the SSE with a sandwich structure, including the following steps:
mixing the PEO, the ceramic powder, the ionic liquid, the lithium salt, and the photoinitiator with an organic solvent, coating an obtained slurry on the two side surfaces of the lithium battery separator, and drying to obtain a film with a sandwich structure; and
subjecting the film with a sandwich structure to hot pressing and ultraviolet crosslinking sequentially to obtain the SSE with a sandwich structure.

In the present disclosure, the PEO, the ceramic powder, the ionic liquid, the lithium salt, and the photoinitiator are mixed with an organic solvent. The organic solvent includes preferably one or more of anhydrous acetonitrile, dimethylformamide, and acetone, more preferably the anhydrous acetonitrile. When the organic solvent includes the above types, there is no special limitation on a ratio of different types of organic solvents, and any ratio can be adopted. A mass of the PEO and a volume of the organic solvent are at a ratio of preferably 1 g: (20-40) mL, more preferably 1 g: 30 mL.

In the present disclosure, a mixing process of the PEO, ceramic powder, ionic liquid, lithium salt, photoinitiator, and organic solvent includes preferably: dispersing the ceramic powder, ionic liquid, lithium salt, and photoinitiator in the organic solvent, adding the PEO, and stirring to obtain a slurry.

In the present disclosure, the dispersing is conducted at preferably 25°C to 60°C, more preferably 30°C to 40°C for preferably 1 h to 5 h, more preferably 2 h preferably by stirring. There is no special limitation on a stirring rate, and it is sufficient to mix the materials evenly at a stirring rate well known in the art.

In the present disclosure, the stirring is conducted at preferably 25°C to 60°C, more preferably 30°C to 40°C for preferably 12 h to 24 h, more preferably 24 h. There is no special limitation on a stirring rate, and it is sufficient to mix the materials evenly at a stirring rate well known in the art.

In the present disclosure, an obtained slurry is coated on the two side surfaces of the lithium battery separator, and dried to obtain a film with a sandwich structure.

In the present disclosure, there is no special limitation on a coating process, as long as the slurry can be evenly coated on the two side surfaces of the lithium battery separator by using a coating process well known in the art.

In the present disclosure, the drying includes preferably normal-pressure drying and vacuum drying that are conducted in sequence. The normal-pressure drying is conducted preferably in a normal-temperature drying oven for preferably 4 h to 6 h, more preferably 6 h. The vacuum drying is conducted preferably in a vacuum drying oven at preferably -0.8 MPa to -1 MPa, more preferably -1 MPa and preferably 60°C to 80°C, more preferably 60°C for preferably 12 h to 24 h, more preferably 12 h.

In the present disclosure, the film with a sandwich structure has a thickness of preferably 50 µm to 200 µm, more preferably 50 µm to 100 µm.

In the present disclosure, the organic solvent used in the preparation of the film with a sandwich structure is completely removed by the drying.

In the present disclosure, the film with a sandwich structure is subjected to hot pressing.

In the present disclosure, the hot pressing is conducted at preferably 60°C to 80°C, more preferably 60°C to 70°C. There is no special limitation on a hot pressing process, and a hot pressing process well known in the art can be used.

In the present disclosure, the film with a sandwich structure after the hot pressing is subjected to ultraviolet crosslinking to obtain the SSE with a sandwich structure.

In the present disclosure, the ultraviolet crosslinking is preferably conducted under ultraviolet radiation. The ultraviolet radiation is preferably produced by an ultraviolet lamp; the ultraviolet lamp has a power of preferably 350 W to 500 W, more preferably 500 W; the ultraviolet crosslinking is conducted for preferably 3 min to 5 min, more preferably 5 min; and the ultraviolet crosslinking is preferably conducted on the both sides of the film with a sandwich structure separately.

In an example of the present disclosure, the photoinitiator is preferably benzophenone. The ultraviolet crosslinking has a reaction process shown in the following formula: 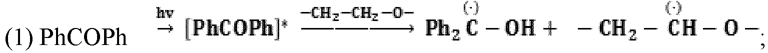 and

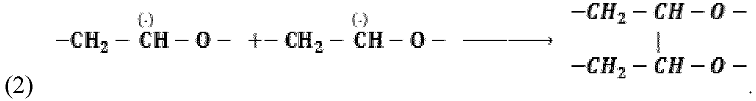

The present disclosure further provides use of the SSE with a sandwich structure or an SSE with a sandwich structure prepared by the preparation method in a solid-state lithium ion battery.

The present disclosure further provides a solid-state lithium ion battery, including a cathode, an SSE with a sandwich structure, and an anode that are sequentially laminated; where
the SSE with a sandwich structure is the SSE with a sandwich structure described above or an SSE with a sandwich structure prepared by the preparation method.

In the present disclosure, the cathode includes preferably a cathode current collector, a cathode active material, a conductive agent, a binder, and an ion transport material. The cathode active material includes preferably one or more of layered lithium metal oxide, spinel structure material, polyanion structure material, and lithium-rich and manganese-based solid solution material, more preferably the layered lithium metal oxide. When the cathode active material includes the above types, there is no special limitation on a ratio of different types of cathode active materials, and any ratio can be adopted. The layered lithium metal oxide includes preferably one or more of LiMO₂, M=Ni, Mn, Co, LiNiₓMn_{y}Co_{z}O₂, x + y + z = 1, x ≥ 0.6 (NMC), and LiNi_{0.8}Co_{0.15}Al_{0.05}O₂ (NCA), more preferably the LiNiₓMn_{y}Co_{z}O₂, x + y + z = 1, x ≥ 0.6 (NMC). When the layered lithium metal oxide includes the above types, there is no special limitation on a ratio of different types of layered lithium metal oxides, and any ratio can be adopted. The spinel structure material is preferably LiMn₂O₄. The polyanion structure material includes preferably one or more of lithium iron phosphate (LiFePO₄), lithium cobalt phosphate (LiCoPO₄), and lithium iron silicate (Li₂FeSiO₄), more preferably the lithium iron phosphate (LiFePO₄). When the spinel structure material includes the above types, there is no special limitation on a ratio of different types of spinel structure materials, and any ratio can be adopted. The lithium-rich and manganese-based solid solution material is preferably xLi₂MnO₃·(1-x)LiMn_{y}M_{1-y}O₂, M=Ni, Co, x=0-1, y=0-1. The anode is preferably lithium metal.

In the present disclosure, there is no special limitation on a preparation method of the solid-state lithium ion battery, and a preparation method well known in the art can be used.

The technical solutions of the present disclosure will be clearly and completely described below with reference to the examples of the present disclosure.

### Example 1

An SSE with a sandwich structure included the following raw materials: a PE separator, as well as PEO (with a weight-average molecular weight of 1 million), LATP (Li_{1.3}Al_{0.3}Ti_{1.7}(PO₄)₃), 1-ethyl-3-methylimidazole bis(trifluoromethanesulphonyl)imide (EMIM-TFSI), lithium bis(trifluoromethanesulphonyl)imide (LiTFSI), and benzophenone (BP) at a mass ratio of 44.5:5:30:20:0.5.

A preparation method of the SSE with a sandwich structure included the following steps:
0.05 g of the LATP, 0.3 g of the 1-ethyl-3-methylimidazole bis(trifluoromethanesulphonyl)imide (EMIM-TFSI), 0.2 g of the lithium bis(trifluoromethanesulphonyl)imide (LiTFSI), and 0.005 g of the benzophenone (BP) were dispersed in anhydrous acetonitrile, and stirred at 30°C for 2 h; a resulting mixture was added with 0.445 g of the PEO (a mass of the PEO and a volume of the anhydrous acetonitrile were at a ratio of 1 g: 30 mL), and stirred at 30°C for 24 h to obtain a slurry.

The slurry was uniformly coated on both sides of the PE separator (with a thickness of 10 µm), dried in a normal-temperature drying oven for 6 h, and then vacuum-dried at -1 MPa in a vacuum drying oven at 60°C for 12 h to obtain a film with a sandwich structure; the film with a sandwich structure was subjected to hot pressing at 60°C, and then both sides of the film with a sandwich structure were illuminated by a 500 W ultraviolet lamp for 5 min to obtain the SSE with a sandwich structure.

### Example 2

An SSE with a sandwich structure included the following raw materials: a PE separator, as well as PEO (with a weight-average molecular weight of 5 million), LLZO (Li₇La₃Zr₂O₁₂), 1-ethyl-3-methylimidazole tetraborate (EMIM-BF₄), lithium bis(oxalate)borate (LiBOB), and benzophenone (BP) at a mass ratio of 54.5:10:20:15:0.5.

A preparation method of the SSE with a sandwich structure included the following steps:
0.1 g of the LLZO, 0.2 g of the 1-ethyl-3-methylimidazole tetraborate (EMIM-BF₄), 0.15 g of the lithium bis(oxalate)borate (LiBOB), and 0.005 g of the benzophenone (BP) were dispersed in anhydrous acetonitrile, and stirred at 30°C for 2 h; a resulting mixture was added with 0.545 g of the PEO (a mass of the PEO and a volume of the anhydrous acetonitrile were at a ratio of 1 g: 30 mL), and stirred at 30°C for 24 h to obtain a slurry.

The slurry was uniformly coated on both sides of the PE separator (with a thickness of 10 µm), dried in a normal-temperature drying oven for 6 h, and then vacuum-dried at -1 MPa in a vacuum drying oven at 60°C for 12 h to obtain a film with a sandwich structure; the film with a sandwich structure was subjected to hot pressing at 60°C, and then both sides of the film with a sandwich structure were illuminated by a 500 W ultraviolet lamp for 5 min to obtain the SSE with a sandwich structure.

### Example 3

An SSE with a sandwich structure included the following raw materials: a PE separator, as well as PEO (with a weight-average molecular weight of 1 million), LATP (Li_{1.3}Al_{0.3}Ti_{1.7}(PO₄)₃), 1-ethyl-3-methylimidazole bis(trifluoromethanesulphonyl)imide (EMIM-TFSI), lithium bis(trifluoromethanesulphonyl)imide (LiTFSI), and benzophenone (BP) at a mass ratio of 38:10:25:25:2.

A preparation method of the SSE with a sandwich structure included the following steps:
0.1 g of the LATP, 0.25 g of the 1-ethyl-3-methylimidazole bis(trifluoromethanesulphonyl)imide (EMIM-TFSI), 0.25 g of the lithium bis(trifluoromethanesulphonyl)imide (LiTFSI), and 0.02 g of the benzophenone (BP) were dispersed in anhydrous acetonitrile, and stirred at 30°C for 2 h; a resulting mixture was added with 0.38 g of the PEO (a mass of the PEO and a volume of the anhydrous acetonitrile were at a ratio of 1 g: 30 mL), and stirred at 30°C for 24 h to obtain a slurry.

The slurry was uniformly coated on both sides of the PE separator (with a thickness of 10 µm) coated with aluminum oxide on one side, dried in a normal-temperature drying oven for 6 h, and then vacuum-dried at -1 MPa in a vacuum drying oven at 60°C for 12 h to obtain a film with a sandwich structure; the film with a sandwich structure was subjected to hot pressing at 60°C, and then both sides of the film with a sandwich structure were illuminated by a 500 W ultraviolet lamp for 5 min to obtain the SSE with a sandwich structure (50 µm).

### Example 4

An SSE with a sandwich structure included the following raw materials: a PE separator, as well as PEO (with a weight-average molecular weight of 4 million), LATP (Li_{1.3}Al_{0.3}Ti_{1.7}(PO₄)₃), 1-ethyl-3-methylimidazole bis(trifluoromethanesulphonyl)imide (EMIM-TFSI), lithium bis(trifluoromethanesulphonyl)imide (LiTFSI), and benzophenone (BP) at a mass ratio 59:10:20:10:1.

A preparation method of the SSE with a sandwich structure included the following steps:
0.1 g of the LATP, 0.2 g of the 1-ethyl-3-methylimidazole bis(trifluoromethanesulphonyl)imide (EMIM-TFSI), 0.1 g of the lithium bis(trifluoromethanesulphonyl)imide (LiTFSI), and 0.01 g of the benzophenone (BP) were dispersed in anhydrous acetonitrile, and stirred at 30°C for 2 h; a resulting mixture was added with 0.59 g of the PEO (a mass of the PEO and a volume of the anhydrous acetonitrile were at a ratio of 1 g: 30 mL), and stirred at 30°C for 24 h to obtain a slurry.

The slurry was uniformly coated on both sides of the PE separator (with a thickness of 10 µm), dried in a normal-temperature drying oven for 6 h, and then vacuum-dried at -1 MPa in a vacuum drying oven at 60°C for 12 h to obtain a film with a sandwich structure; the film with a sandwich structure was subjected to hot pressing at 60°C, and then both sides of the film with a sandwich structure were illuminated by a 500 W ultraviolet lamp for 5 min to obtain the SSE with a sandwich structure.

### Comparative Example 1

This comparative example differed from Example 4 in that LATP, 1-ethyl-3-methylimidazole bis(trifluoromethanesulphonyl)imide (EMIM-TFSI), and benzophenone (BP) were not added, and no ultraviolet crosslinking was conducted. All the other steps were consistent with those of Example 4.

### Performance testing

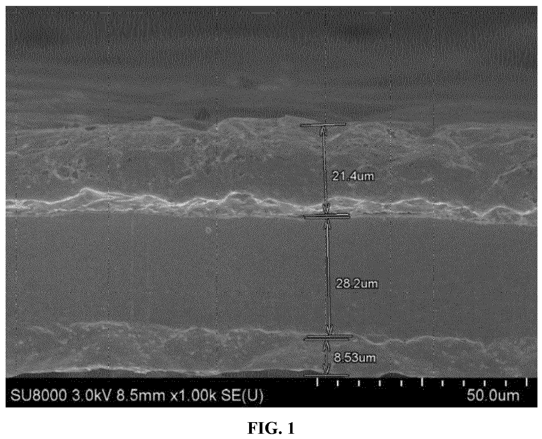

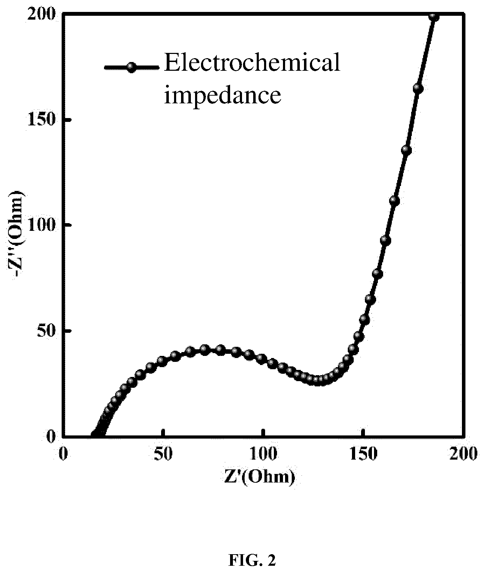

(1) SEM testing was conducted on an interface of the SSE with a sandwich structure prepared in Example 1, and the results were shown in FIG. 1.
   As shown in the SEM section view of FIG. 1, the slurry composed of inorganic materials and organic materials was evenly coated on both sides of the PE separator and tightly connected with the PE separator to form a sandwich structure. In addition, it was seen from FIG. 1 that the PE separator had a thickness of about 28.5 µm, and the thicknesses of the SSEs on both sides were measured to be 21.4 µm and 8.5 µm, respectively, corresponding to the anode and cathode of the battery.
(2) The SSE with a sandwich structure in Example 2 was sandwiched between two stainless steels to make a blocking electrode for AC impedance testing, and the results were shown in FIG. 2.
   As shown in FIG. 2, the SSE with a sandwich structure in Example 2 had a room temperature resistance of 125 ohms.
(3) Characterization of battery performance

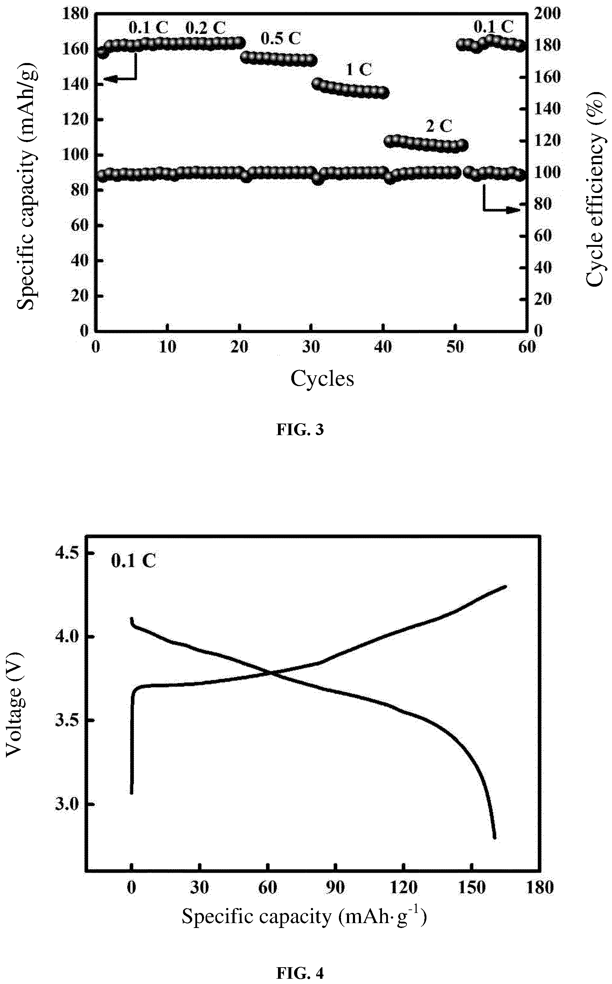

An active material lithium iron phosphate, conductive carbon black, and a binder polyvinylidene fluoride were mixed at a mass ratio of 8:1:1, and a N-methylpyrrolidone solvent was added and stirred until a uniform slurry was formed. The slurry was uniformly coated on an aluminum foil, dried at 120°C for 12 h, cut into 13 mm electrode sheets, and dried in a vacuum drying oven at 120°C for 24 h to obtain a cathode. A lithium iron phosphate/lithium metal button battery was obtained by assembling metal lithium serving as an anode, the cathode, and the SSE with a sandwich structure prepared in Example 3. A charge-discharge curve and a cycle performance of the button battery were tested with a NEWARE battery program-controlled tester, and the results were shown in FIG. 3.

As shown in FIG. 3, the lithium iron phosphate/lithium metal battery assembled by the SSE with a sandwich structure had long-term cycle performance and stable performance at 0.1 C, 0.2 C, 0.5 C, 1 C, and 2 C under room temperature, and its capacities were 163 mAh/g, 163 mAh/g, 153 mAh/g, 136 mAh/g, and 104 mAh/g, respectively. When the rate was adjusted to 0.1 C, the capacity recovered to 163 mAh/g.

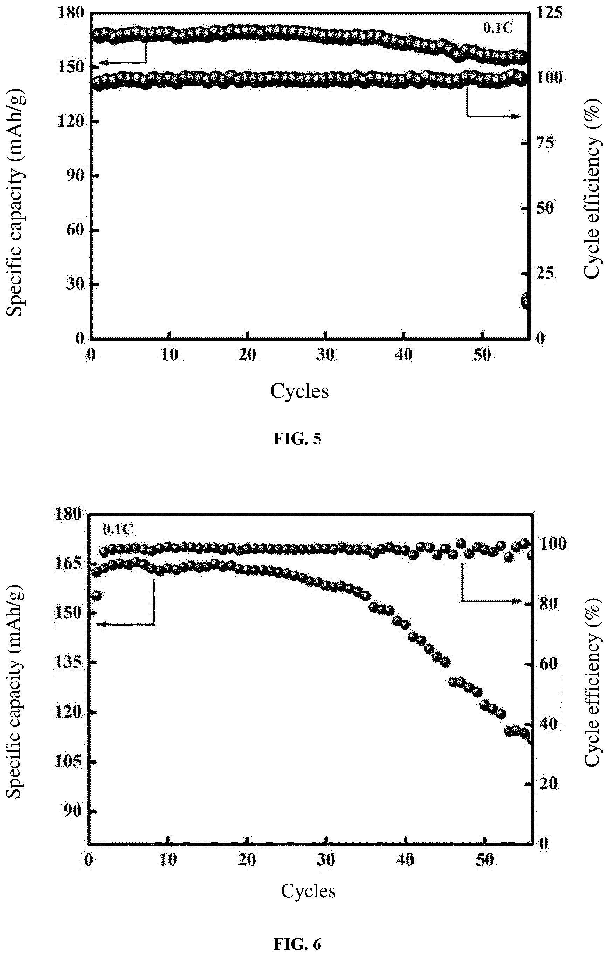

(4) An active material lithium nickel cobalt manganese (NMC 811), conductive carbon black, and a binder polyvinylidene fluoride were mixed at a mass ratio of 8:1:1, and a N-methylpyrrolidone solvent was added and stirred until a uniform slurry was formed. The slurry was uniformly coated on an aluminum foil, dried at 120°C for 12 h, cut into 13 mm electrode sheets, and dried in a vacuum drying oven at 120°C for 24 h to obtain a cathode. An NMC 811/lithium metal button battery was obtained by assembling metal lithium serving as an anode, the cathode, and the SSE with a sandwich structure prepared in Example 4. A charge-discharge curve and a relationship between cycle and capacity of the button battery were tested with a NEWARE battery program-controlled tester, the cycle performance at 0.1 C was shown in FIG. 4, and the specific capacity-efficiency at 0.1 C was shown in FIG. 5.

As shown in FIG. 4 and FIG. 5, the NMC 811/lithium metal battery assembled by the SSE with a sandwich structure had a capacity of 165 mAh/g under room temperature at 0.1 C, and a capacity retention rate was still 155 mAh/g after 55 cycles.

(5) An active material lithium nickel cobalt manganese (NMC 811), conductive carbon black, and a binder polyvinylidene fluoride were mixed at a mass ratio of 8:1:1, and a N-methylpyrrolidone solvent was added and stirred until a uniform slurry was formed. The slurry was uniformly coated on an aluminum foil, dried at 120°C for 12 h, cut into 13 mm electrode sheets, and dried in a vacuum drying oven at 120°C for 24 h to obtain a cathode. An NMC 811/lithium metal button battery was obtained by assembling metal lithium serving as an anode, the cathode, and the SSE with a sandwich structure prepared in Comparative Example 1. A charge-discharge curve and a relationship between cycle and capacity of the button battery were tested with a NEWARE battery program-controlled tester, and the results were shown in FIG. 6.

As shown in FIG. 6, the NMC 811/lithium metal battery assembled by the SSE with a conventional ratio had a rapid capacity decay under room temperature at 0.1C, and could not be adapted to a high-voltage cathode.

## Claims

1. A solid-state electrolyte (SSE) with a sandwich structure, comprising a lithium battery separator and a first composite SSE and a second composite SSE that are coated on two side surfaces of the lithium battery separator, respectively;
wherein the SSE with the sandwich structure is prepared by a method comprising
mixing polyethylene oxide, a ceramic powder, an ionic liquid, a lithium salt, and a photoinitiator with an organic solvent, coating an obtained slurry on the two side surfaces of the lithium battery separator, and drying to obtain a film with a sandwich structure; and
subjecting the film with the sandwich structure to hot pressing and ultraviolet crosslinking sequentially to obtain the SSE with the sandwich structure;
wherein the polyethylene oxide has a weight-average molecular weight of 0.1 million to 7 million;
the ceramic powder is one or more selected from the group consisting of lithium aluminum titanium phosphate, lithium lanthanum zirconium oxide, lithium lanthanum titanium oxide, lithium aluminum oxide, doped lithium lanthanum zirconium oxide, lithium germanium phosphorus sulfide, and lithium phosphorus sulfide;
the lithium salt is one or more selected from the group consisting of lithium perchlorate, lithium hexafluoroarsenate, lithium hexafluorophosphate, lithium bis(trifluoromethanesulphonyl)imide, lithium tetrafluoroborate, lithium trifluoromethanesulfonate, and lithium bis(oxalate)borate;
the photoinitiator comprises a hydrogen abstraction photoinitiator;
the ionic liquid is an imidazole-based ionic liquid or a pyrrolidine-based ionic liquid, the imidazole ionic liquid being 1-ethyl-3-methylimidazole bis(trifluoromethanesulphonyl)imide or 1-ethyl-3-methylimidazole tetraborate, and the pyrrolidine-based ionic liquid being 1-n-butyl-1-methylpyrrolidine bis(trifluoromethanesulphonyl)imide; and
the PEO, the ceramic powder, the ionic liquid, the lithium salt, and the photoinitiator are at a mass ratio of (20-90):(5-15):(10-60):(10-50):(0.5-2).

2. The SSE with a sandwich structure according to claim 1, wherein the lithium battery separator is selected from the group consisting of a polyethylene separator, a polypropylene separator, a ceramic separator, and a cellulose separator.

3. A method for preparing a solid-state electrolyte (SSE) with a sandwich structure,
the SSE with the sandwich structure comprising a lithium battery separator and a first composite SSE and a second composite SSE that are coated on two side surfaces of the lithium battery separator, respectively,
the method comprising the following steps:
mixing polyethylene oxide, a ceramic powder, an ionic liquid, a lithium salt, and a photoinitiator with an organic solvent, coating an obtained slurry on the two side surfaces of the lithium battery separator, and drying to obtain a film with a sandwich structure; and
subjecting the film with the sandwich structure to hot pressing and ultraviolet crosslinking sequentially to obtain the SSE with the sandwich structure,
wherein the polyethylene oxide has a weight-average molecular weight of 0.1 million to 7 million;
the ceramic powder is one or more selected from the group consisting of lithium aluminum titanium phosphate, lithium lanthanum zirconium oxide, lithium lanthanum titanium oxide, lithium aluminum oxide, doped lithium lanthanum zirconium oxide, lithium germanium phosphorus sulfide, and lithium phosphorus sulfide;
the lithium salt is one or more selected from the group consisting of lithium perchlorate, lithium hexafluoroarsenate, lithium hexafluorophosphate, lithium bis(trifluoromethanesulphonyl)imide, lithium tetrafluoroborate, lithium trifluoromethanesulfonate, and lithium bis(oxalate)borate;
the photoinitiator comprises a hydrogen abstraction photoinitiator;
the ionic liquid is an imidazole-based ionic liquid or a pyrrolidine-based ionic liquid, the imidazole ionic liquid being 1-ethyl-3-methylimidazole bis(trifluoromethanesulphonyl)imide or 1-ethyl-3-methylimidazole tetraborate, and the pyrrolidine-based ionic liquid being 1-n-butyl-1-methylpyrrolidine bis(trifluoromethanesulphonyl)imide; and
the PEO, the ceramic powder, the ionic liquid, the lithium salt, and the photoinitiator are at a mass ratio of (20-90):(5-15):(10-60):(10-50):(0.5-2).

4. Use of the SSE with the sandwich structure according to any one of claims 1 to 2 in a solid-state lithium ion battery.

5. A solid-state lithium ion battery, comprising a cathode, the SSE with the sandwich structure according to any one of claims 1 to 2, and an anode that are sequentially laminated.

## Patentansprüche

1. Feststoffelektrolyt (SSE) mit Sandwichstruktur, umfassend einen Separator für Lithiumbatterien, einen ersten Verbundwerkstoff SSE und einen zweiten Verbundwerkstoff SSE, die jeweils auf die beiden Seitenflächen des Separators für Lithiumbatterien aufgetragen werden;
wobei das SSE mit Sandwichstruktur durch ein Verfahren vorbereitet wird, das umfasst
Mischen Polyethylenoxid, eines Keramikpulvers, einer ionischen Flüssigkeit, eines Lithiumsalzes und eines Photoinitiators mit einem organischen Lösungsmittel, Auftragen der erhaltenen flüssigen Mischung auf die beiden Seitenflächen des Separators für Lithiumbatterien und Trocknen, um einen Film mit Sandwichstruktur zu erhalten; und
Unterziehen des Films mit Sandwichstruktur sequentiell einer Heißpressung und UV-Vernetzung, um das SSE mit Sandwichstruktur zu erhalten;
wobei das Polyethylenoxid ein gewichtdurchschnittliches Molekulargewicht von 0,1 Millionen bis 7 Millionen aufweist;
das Keramikpulver eines oder mehrere ist, die aus der Gruppe bestehend aus Lithium-Aluminium-Titan-Phosphat, Lithium-Lanthan-Zirkon-Oxid, Lithium-Lanthan-Titan-Oxid, Lithium-Aluminium-Oxid, dotiertem Lithium-Lanthan-Zirkon-Oxid, Lithium-Germanium-Phosphor-Sulfid und Lithium-Phosphor-Sulfid ausgewählt wird/werden;
das Lithiumsalz eines oder mehrere ist, die aus der Gruppe bestehend aus Lithiumperchlorat, Lithiumhexafluoroarsenat, Lithiumhexafluorophosphat, Lithiumbis(trifluormethansulfonyl)imid, Lithiumtetrafluorborat, Lithiumtrifluormethansulfonat und Lithiumbis(oxalato)borat ausgewählt wird/werden;
der Photoinitiator einen Photoinitiator mit Wasserstoffabstraktion umfasst;
die ionische Flüssigkeit eine imidazolium-basierte ionische Flüssigkeit oder eine pyrrolidin-basierte ionische Flüssigkeit ist, wobei die imidazolium-basierte ionische Flüssigkeit 1-ethyl-3-methylimidazolium-bis(trifluormethansulfonyl)imid oder 1-ethyl-3-methylimidazolium-tetraborat ist, und die pyrrolidin-basierte ionische Flüssigkeit 1-n-butyl-1-methylpyrrolidin-bis(trifluormethansulfonyl)imid ist; und
wobei PEO, Keramikpulver, ionische Flüssigkeit, Lithiumsalz und Photoinitiator in einem Massverhältnis (20-90):(5-15):(10-60):(10-50):(0,5-2) stehen.

2. SSE mit Sandwichstruktur nach Anspruch 1, wobei der Separator für Lithiumbatterien aus der Gruppe bestehend aus einem Polyethylen-Separator, einem Polypropylen-Separator, einem Keramik-Separator und einem Zellulose-Separator ausgewählt wird.

3. Verfahren zur Vorbereitung eines Feststoffelektrolyts (SSE) mit Sandwichstruktur, wobei das SSE mit Sandwichstruktur einen Separator für Lithiumbatterien, einen ersten Verbundwerkstoff-SSE und einen zweiten Verbundwerkstoff-SSE umfasst, die jeweils auf die beiden Seitenflächen des Separators für Lithiumbatterien aufgetragen werden;
wobei das Verfahren die folgenden Schritte umfasst:
Mischen Polyethylenoxid, eines Keramikpulvers, einer ionischen Flüssigkeit, eines Lithiumsalzes und eines Photoinitiators mit einem organischen Lösungsmittel, Auftragen der erhaltenen flüssigen Mischung auf die beiden Seitenflächen des Separators für Lithiumbatterien und Trocknen, um einen Film mit Sandwichstruktur zu erhalten;
Unterziehen des Films mit Sandwichstruktur sequentiell einer Heißpressung und UV-Vernetzung, um das SSE mit Sandwichstruktur zu erhalten;
wobei das Polyethylenoxid ein gewichtdurchschnittliches Molekulargewicht von 0,1 Millionen bis 7 Millionen aufweist;
das Keramikpulver eines oder mehrere ist, die aus der Gruppe bestehend aus Lithium-Aluminium-Titan-Phosphat, Lithium-Lanthan-Zirkon-Oxid, Lithium-Lanthan-Titan-Oxid, Lithium-Aluminium-Oxid, dotiertem Lithium-Lanthan-Zirkon-Oxid, Lithium-Germanium-Phosphor-Sulfid und Lithium-Phosphor-Sulfid ausgewählt wird/werden;
das Lithiumsalz eines oder mehrere ist die aus der Gruppe bestehend aus Lithiumperchlorat, Lithiumhexafluoroarsenat, Lithiumhexafluorophosphat, Lithiumbis(trifluormethansulfonyl)imid, Lithiumtetrafluorborat, Lithiumtrifluormethansulfonat und Lithiumbis(oxalato)borat ausgewählt wird/werden;
der Photoinitiator einen Photoinitiator mit Wasserstoffabstraktion umfasst;
die ionische Flüssigkeit eine imidazolium-basierte ionische Flüssigkeit oder eine pyrrolidin-basierte ionische Flüssigkeit ist, wobei die imidazolium-basierte ionische Flüssigkeit 1-ethyl-3-methylimidazolium-bis(trifluormethansulfonyl)imid oder 1-ethyl-3-methylimidazolium-tetraborat ist, und die pyrrolidin-basierte ionische Flüssigkeit 1-n-butyl-1-methylpyrrolidin-bis(trifluormethansulfonyl)imid ist; und
wobei PEO, Keramikpulver, ionische Flüssigkeit, Lithiumsalz und Photoinitiator in einem Massverhältnis (20-90):(5-15):(10-60):(10-50):(0,5-2) stehen.

4. Verwendung des SSE mit Sandwichstruktur nach einem der Ansprüche 1 bis 2 in einer Feststoff-Lithium-Ionen-Batterie.

5. Feststoff-Lithium-Ionen-Batterie, umfassend eine Kathode, das SSE mit Sandwichstruktur nach einem der Ansprüche 1 bis 2, und eine Anode, die nacheinander gewalzt werden.

## Revendications

1. Électrolyte à état solide (SSE) à structure en sandwich, comprenant un séparateur de batterie au lithium, un premier SSE composite et un second SSE composite qui sont respectivement appliqués sur les deux surfaces latérales du séparateur de batterie au lithium;
dans lequel le SSE à structure en sandwich est préparé par un procédé comprenant
mélanger du polyéthylène oxyde, une poudre céramique, un liquide ionique, un sel de lithium et un photo-initiateur avec un solvant organique, appliquer le mélange obtenu sur les deux surfaces latérales du séparateur de batterie au lithium et sécher pour obtenir un film à structure en sandwich; et
soumettre ensuite le film à structure en sandwich à un pressage à chaud et un réticulation par ultraviolet séquentiellement pour obtenir le SSE à structure en sandwich;
dans lequel le polyéthylène oxyde présente une masse moléculaire moyenne en poids comprise entre 0,1 million et 7 millions;
la poudre céramique est sélectionnée parmi un ou plusieurs des éléments du groupe constitué de phosphate de lithium-aluminium-titane, oxyde de lithium-lanthane-zirconium, oxyde de lithium-lanthane-titane, oxyde de lithium-aluminium, oxyde de lithium-lanthane-zirconium dopé, sulfure de lithium-germanium-phosphore, et sulfure de lithium-phosphore;
le sel de lithium est sélectionné parmi un ou plusieurs des éléments du groupe constitué de perchlorate de lithium, hexafluoroarsénate de lithium, hexafluorophosphate de lithium, bis(trifluorométhanesulfonyl)imide de lithium, tétrafluoroborate de lithium, trifluorométhanesulfonate de lithium et bis(oxalate)borate de lithium;
le photo-initiateur comprend un photo-initiateur à abstraction d'hydrogène;
le liquide ionique est un liquide ionique à base d'imidazole ou à base de pyrrolidine, le liquide ionique à base d'imidazole étant le bis(trifluorométhanesulfonyl)imide de 1-éthyl-3-méthylimidazole ou le tétraborate de 1-éthyl-3-méthylimidazole, et le liquide ionique à base de pyrrolidine étant le bis(trifluorométhanesulfonyl)imide de 1-n-butyl-1-méthylpyrrolidine; et
les rapports massiques de PEO, poudre céramique, liquide ionique, sel de lithium et photo-initiateur sont de (20-90):(5-15):(10-60):(10-50):(0,5-2).

2. Le SSE à structure en sandwich selon la revendication 1, dans lequel le séparateur de batterie au lithium est sélectionné parmi le groupe constitué d'un séparateur en polyéthylène, un séparateur en polypropylène, un séparateur céramique et un séparateur en cellulose.

3. Procédé de préparation d'un électrolyte à état solide (SSE) à structure en sandwich,
le SSE à structure en sandwich comprenant un séparateur de batterie au lithium et un premier SSE composite et un second SSE composite qui sont respectivement appliqués sur les deux surfaces latérales du séparateur de batterie au lithium,
le procédé comprenant les étapes suivantes:
mélanger du polyéthylène oxyde, une poudre céramique, un liquide ionique, un sel de lithium et un photo-initiateur avec un solvant organique, appliquer le mélange obtenu sur les deux surfaces latérales du séparateur de batterie au lithium et sécher pour obtenir un film à structure en sandwich;
soumettre ensuite le film à structure en sandwich à un pressage à chaud et une réticulation par ultraviolet séquentiellement pour obtenir le SSE à structure en sandwich;
dans lequel le polyéthylène oxyde présente une masse moléculaire moyenne en poids comprise entre 0,1 million et 7 millions;
la poudre céramique est sélectionnée parmi un ou plusieurs des éléments du groupe constitué de phosphate de lithium-aluminium-titane, oxyde de lithium-lanthane-zirconium, oxyde de lithium-lanthane-titane, oxyde de lithium-aluminium, oxyde de lithium-lanthane-zirconium dopé, sulfure de lithium-germanium-phosphore, et sulfure de lithium-phosphore;
le sel de lithium est sélectionné parmi un ou plusieurs des éléments du groupe constitué de perchlorate de lithium, hexafluoroarsénate de lithium, hexafluorophosphate de lithium, bis(trifluorométhanesulfonyl)imide de lithium, tétrafluoroborate de lithium, trifluorométhanesulfonate de lithium et bis(oxalate)borate de lithium;
le photo-initiateur comprend un photo-initiateur à abstraction d'hydrogène;
le liquide ionique est un liquide ionique à base d'imidazole ou à base de pyrrolidine, le liquide ionique à base d'imidazole étant le bis(trifluorométhanesulfonyl)imide de 1-éthyl-3-méthylimidazole ou le tétraborate de 1-éthyl-3-méthylimidazole, et le liquide ionique à base de pyrrolidine étant le bis(trifluorométhanesulfonyl)imide de 1-n-butyl-1-méthylpyrrolidine; et
les rapports massiques de PEO, poudre céramique, liquide ionique, sel de lithium et photo-initiateur sont de (20-90):(5-15):(10-60):(10-50):(0,5-2).

4. Utilisation du SSE à structure en sandwich selon l'une quelconque des revendications 1 à 2 dans une batterie au lithium-ion à état solide.

5. Batterie au lithium-ion à état solide, comprenant une cathode, le SSE à structure en sandwich selon l'une quelconque des revendications 1 à 2, et une anode qui sont laminées de manière séquentielle.
